**Europäisches Patentamt**

**European Patent Office**

**Office européen des brevets**

(11) Veröffentlichungsnummer : **0 109 566**
**B1**

(12) **EUROPÄISCHE PATENTSCHRIFT**

(45) Veröffentlichungstag der Patentschrift :
28.05.86

(51) Int. Cl.⁴ : **F 41 H 5/26**

(21) Anmeldenummer : **83110495.5**

(22) Anmeldetag : **21.10.83**

(54) Beschusssicherer Verbundglasblock für den Sehschlitz eines Panzerfahrzeugs.

(30) Priorität : **22.11.82 DE 3243136**

(43) Veröffentlichungstag der Anmeldung :
**30.05.84 Patentblatt 84/22**

(45) Bekanntmachung des Hinweises auf die Patenterteilung : **28.05.86 Patentblatt 86/22**

(84) Benannte Vertragsstaaten :
**AT CH DE FR GB IT LI SE**

(56) Entgegenhaltungen :
**GB-A- 568 417**
**US-A- 1 974 432**

(73) Patentinhaber : **VEGLA Vereinigte Glaswerke GmbH**
**Viktoriaallee 3-5**
**D-5100 Aachen (DE)**

(72) Erfinder : **Straeten, Franz-Josef, Dipl.-Ing.**
**Blumenstrasse 9**
**D-5100 Aachen (DE)**
Erfinder : **Werner, Rudolf H.**
**Hofzeile 10-12**
**A-1190 Wien (AT)**
Erfinder : **Kranz, Winand, Dr. Dipl.-Ing.**
**Eupener Strasse 283c**
**D-5100 Aachen (DE)**
Erfinder : **Vornholt, Hans**
**Kleikstrasse 97**
**D-5120 Herzogenrath (DE)**

(74) Vertreter : **Biermann, Wilhelm, Dr.-Ing. et al**
**VEGLA Vereinigte Glaswerke GmbH Viktoriaallee 3-5**
**D-5100 Aachen (DE)**

## Beschreibung

Die Erfindung betrifft einen beschußsicheren, von einem Metallgehäuse umgebenen Verbundglasblock für den Sehschlitz eines Panzerfahrzeugs.

Als beschußsichere optische Bauteile, die die Sicht aus gepanzerten Fahrzeugen heraus ermöglichen, werden in der Regel Winkelspiegel oder Periskope verwendet. Diese optischen Bauteile haben jedoch ein stark eingeschränktes Sichtfeld, was für manche Zwecke unvorteilhaft ist.

Sehschlitze ohne Strahlenumlenkung weisen diesen Nachteil nicht auf, wenn sie hinreichend breit und gegebenenfalls mit einer konischen Erweiterung ausgeführt sind. Sie sind jedoch dem unmittelbaren Beschuß ausgesetzt. Um sie beschußsicher auszubilden, müssen sie mit beschußsicheren Verbundglasblöcken ausgerüstet sein.

Der Erfindung liegt die Aufgabe zugrunde, einen in hohem Maße beschußsicheren Verbundglasblock für Sehschlitze in Panzerfahrzeugen zu schaffen, der auch gegenüber großkalibriger Munition mit schwerem Hartkerngeschoß einen sicheren Schutz darstellt.

Der erfindungsgemäße Verbundglasblock zeichnet sich dadurch aus, daß innerhalb des Verbundglasblocks in der von der Beschußseite abgewandten Hälfte eine rahmenförmige, sich an das Metallgehäuse anschließende Stahlblende angeordnet ist. Die rahmenförmige Stahlblende bildet gewissermaßen einen umlaufenden Vorsprung entlang der Innenwand des den Verbundglasblock einfassenden Gehäuses, und kann gegebenenfalls auch einstückig mit dem Gehäuse ausgebildet sein.

Die rahmenförmige Stahlblende kann beispielsweise zwischen zwei Glasscheiben angeordnet sein, so daß der von der Stahlblende eingeschlossene Raum ein luft- oder gasgefüllter Zwischenraum ist. In vorteilhafter Weiterbildung der Erfindung ist der von der Stahlblende umgebene Raum jedoch ebenfalls von einer Glasscheibe ausgefüllt. Dadurch wird eine weitere Verbesserung im Sinne der Erfindung erreicht, weil durch die innerhalb der Blende angeordnete Glasscheibe einer Verformung der Stahlblende ein größerer Widerstand entgegengesetzt wird.

Durch die Erfindung wird eine wesentliche Verbesserung der beschußhemmenden Eigenschaften von für Sehschlitze bestimmten Verbundglasblöcken dadurch erreicht, daß die normalerweise zwischen dem Verbundglasblock und dem diesen einfassenden Metallgehäuse verbleibenden Schwachstellen besonders gesichert werden. Die erfindungsgemäßen rahmenförmigen Stahlblenden bewirken nicht nur ein wesentliche Verfestigung des gesamten Verbundglasblocks, sondern haben darüberhinaus insbesondere die Wirkung einer umlaufenden Geschoßauffangblende, die immer dann besonders wirkungsvoll ist, wenn die Geschosse auf dem Weg durch den Panzerglasblock sich nicht streng axial bewegen, sondern zur Gehäusewand hin abgelenkt werden, wo sie im Bereich der Spalten zwischen der Gehäusewand und dem Verbundglasblock auf einen geringeren Widerstand stoßen. Hier stellen die rahmenartigen Blenden wesentliche Hindernisse auf dem Weg des Geschosses entlang der Gehäusewand dar. Dadurch wird vermieden, daß die Geschosse auf diesem Weg bis in die letzten Schichten des Verbundglasblocks vordringen können, womit das Risiko des Splitterabgangs auf der Panzer-Innenseite erheblich vermindert wird.

Die rahmenartige Blende soll im Querschnitt solche Abmessungen aufweisen, daß das Querschnittsprofil wenigstens etwa 1 Zentimeter gegenüber der Gehäusewand vorspringt, und daß die Dicke des Querschnittsprofils in der Achsrichtung des Verbundglasbocks wenigstens etwa 5 mm beträgt. Die rahmenartige Blende besteht vorzugsweise aus gehärtetem Stahl.

Weitere vorteilhafte Weiterbildungen der Erfindung sind Gegenstand der Unteransprüche und ergeben sich aus der Beschreibung zweier Ausführungsbeispiele, die in den Zeichnungen dargestellt sind.

Von den Zeichnungen zeigt, jeweils im Längsschnitt dargestellt.

Figur 1 eine erste Ausführungsform eines beschußsicheren Verbundglasblocks nach der Erfindung, und

Figur 2 eine zweite Ausführungsform eines beschußsicheren Verbundglasbocks nach der Erfindung.

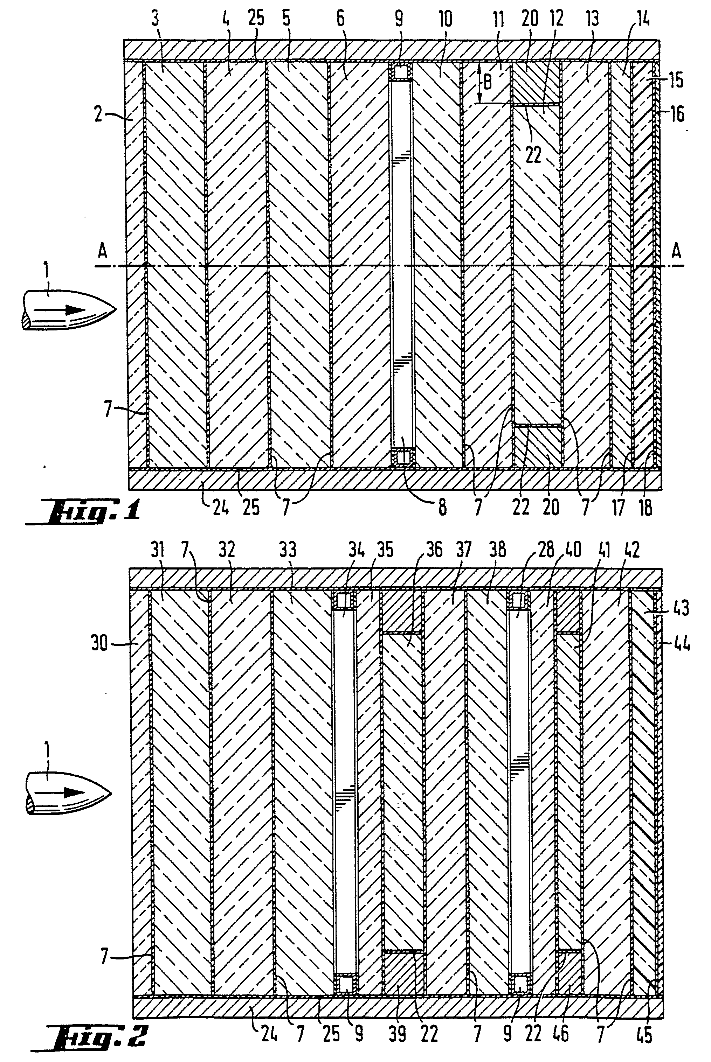

Der in Fig. 1 dargestellte Verbundglasblock ist für einen Sehschlitz von 20 bis 30 cm Breite und 10 cm Höhe bestimmt. Der Verbundglasblock weist, in Richtung von außen nach innen, das heißt in der Bewegungsrichtung des Geschosses 1 gesehen, folgenden Aufbau auf : Eine 5 mm dicke Silikatglasscheibe 2 und vier jeweils 15 mm dicke Silikatglasscheiben 3, 4, 5 und 6 sind über die thermoplastischen Zwischenschichten 7 aus Polyvinylbutyral zu einer Verbundglaseinheit ganzflächig miteinander verklebt. Die Dicke der Zwischenschichten 7 beträgt jeweils 0,38 mm, kann jedoch auch größer sein. An die Glasscheibe 6 schließt sich ein luftgefüllter Zwischenraum 8 mit einer Dicke von 6 mm an, der durch die Anordnung eines Abstandsrahmens 9 gegeben ist. Der Abstandsrahmen 9 ist auf der einen Seite mit der Glasscheibe 6, und auf der anderen Seite mit der Glasscheibe 10 verklebt.

Die Glasscheibe 10 bildet die der Beschußseite zugewandte äußere Glasscheibe eines zweiten Verbundglaspakets, das sich aus vier jeweils 12 mm dicken Glasscheiben 10, 11, 12, 13, einer 5 mm dicken Glasscheibe 14, einer 5 mm dicken Polykarbonatplatte 15, und einer die Kratzfestigkeit verbessernden Polyurethanschicht 16 zusammensetzt. Die Glasscheiben 10, 11, 12, 13 und 14 sind wiederum durch thermoplastische Zwischenschichten 7 aus Polyvinylbutyral miteinander verklebt. Die Polykarbonatplatte 15 ist mit der Glasscheibe 14 über die Schicht 17 aus thermoplastischem Polyurethan, und die Polyurethanschicht 16 ist mit der Polykarbonatplatte 15 ebenfalls über eine thermoplastische Polyurethanschicht 18 verbunden.

Die Glasscheibe 12, die sich etwa in der Mitte des zweiten Verbundglaspakets befindet, hat kleinere Abmessungen als die benachbarten Glasscheiben. In der umlaufenden Nut um diese Glasscheibe 12 ist der Stahlrahmen 20 angeordnet, der einen quadratischen Querschnitt aufweist. Die Dicke des die Stahlblende bildenden Rahmens 20 in Richtung der Achse A-A hat die gleichen Abmessungen wie die Glasscheibe 12. Die Breite B des Stahlblendenprofils quer zur Achse A-A beträgt in diesem Fall ebenfalls 12 mm. Der Stahlrahmen 20 besteht aus gehärtetem hochfesten Stahl, beispielsweise der Stahllegierung 42 Cr Mo 4. Die zwischen der Glasscheibe 12 und dem Stahlrahmen 20 verbleibenden Fugen sind mit einem aushärtenden Kunstharz 22 ausgefüllt.

Der gesamte Schichtenaufbau ist von einem geschlossenen Metallgehäuse 24 umgeben. Die Hohlräume und Fugen zwischen den Umfangsflächen der einzelnen Schichten und dem Metallgehäuse 24 sind mit einem aushärtenden Gießharz 25 ausgefüllt. Der mit dem Metallgehäuse 24 versehene Verbundglasblock wird in die Sehschlitzöffnung des Panzerfahrzeugs eingebaut.

Es ist jedoch auch möglich, den Verbundglasblock ohne das Metallgehäuse 24 unmittelbar in einen entsprechenden Metallrahmen des Panzerfahrzeugs einzusetzen, wobei dieser Metallrahmen die Funktion des Metallgehäuses 24 übernimmt. Auch in diesem Fall werden zweckmäßig die Hohlräume und Spalten zwischen den Umfangsflächen des Verbundglasbocks und dem Metallrahmen mit einem aushärtenden Gießharz ausgefüllt.

Bei der die Kratzfestigkeit verbessernden Polyurethanschicht 16, die die äußere, dem Beobachter zugewandte Oberfläche des Verbundglasblocks bildet, handelt es sich beispielsweise um eine Polyurethanfolie, wie sie in der DE-B-26 29 779 beschrieben ist.

Der in Fig. 2 dargestellte Verbundglasblock hat, ebenfalls in der Bewegungsrichtung des Geschosses 1 gesehen, folgenden Aufbau : Eine 5 mm dicke Glasscheibe 30 und drei jeweils 15 mm dicke Glasscheiben 31, 32, 33 sind über die thermoplastischen Zwischenschichten 7 aus Polyvinylbutyral zu einem Verbundglaspaket miteinander verklebt. An dieses verbundglaspaket schließt sich ein luftgefüllter Zwischenraum 34 von 6 mm Dicke an. Dieser Luftzwischenraum dient dem Zweck, die aufeinanderfolgenden Verbundglaspakete mechanisch zu entkoppeln, um die durch das Geschoß hervorgerufene Stoßwelle in der Glasmasse zu unterbrechen. Der Luftzwischenraum wird nach außen durch den Abstandsrahmen 9 begrenzt, der in der bei Isolierglasscheiben bekannten Art mit den beiden anliegenden Glasscheiben dicht verklebt ist.

An den Luftzwischenraum 34 schließt sich ein zweites Verbundglaspaket an, das von der 6 mm dicken Glasscheibe 35 und den drei jeweils 10 mm dicken Glasscheiben 36, 37 und 38 gebildet wird. Diese Glasscheiben 35 bis 38 sind ebenfalls wiederum durch thermoplastische Folien 7 aus Polyvinylbutyral miteinander verbunden. Innerhalb dieser Verbundglaseinheit ist zwischen den Glasscheiben 35 und 37 eine rahmenartige Stahlblende 39 angeordnet, die die um das entsprechende Maß kleinere Glasscheibe 36 umgibt. Diese Stahlblende 39 hat eine der Dicke der Glasscheibe 36 entsprechende Dicke von 10 mm, und in der Richtung der Ebene der Glasscheibe 36 eine Abmessung von ebenfalls 10 mm. Die Fugen zwischen der Stahlblende 39 und der von dieser umgebenen Glasscheibe 36 sind durch ein aushärtendes Gießharz 22 ausgefüllt.

An dieses zweite Verbundglaspaket schließt sich ein zweiter luft- oder gasgefüllter Zwischenraum 28 von 6 mm Dicke an. Zur Bildung dieses Luftzwischenraums 28, der zur weiteren Entkoppelung der sich in dem Glas fortpflanzenden Stoßwelle dient, ist wiederum ein Abstandsrahmen 9 vorgesehen, der mit den beiden anliegenden Glasscheiben 38 und 40 verklebt ist.

Ein weiteres Verbundglaspaket, das aus den 6 mm dicken Glasscheiben 40, 41, der 12 mm dicken Glasscheibe 42, der 5 mm dicken Polycarbonatplatte 43 und der 0,5 mm dicken hochelastischen Polyurethanschicht 44 mit Selbstheileigenschaften besteht, bildet den letzten Teil des Verbundglasblocks. Die Glasscheiben 40, 41, 42, 43 sind wiederum durhc thermoplastische Polyvinylbutyralschichten miteinander verbunden. Die hochelastische, als Splitterschutzschicht dienende Polyurethanschicht 44, die aufgrund ihrer Selbstheileigenschaften gleichzeitig gegen Kratzer unempfindlich ist, ist mit Hilfe einer Klebeschicht 45 aus Polyurethan mit der Polycarbonatplatte 43 verbunden.

Zwischen den Glasscheiben 40 und 42 ist eine weitere rahmenförmige Stahlblende 46 angeordnet, innerhalb derer die Glasscheibe 41 angeordnet ist. Die Stahlblende 46 hat die gleiche Dicke wie die Glasscheibe 41, und in Richtung der Ebene der Glasscheibe 41 eine Abmessung von 10 mm. Der Spalt zwischen den Umfangsflächen der Glasscheibe 41 und den Innenflächen der Stahlblende 46 ist wiederum mit einem aushärtenden Gießharz 22 ausgefüllt.

Die beiden Stahlblenden bestehen wiederum aus gehärtetem Stahl, beispielsweise der Zusammensetzung 42 Cr Mo 4.

Zur Herstellung des Verbundglasblocks werden zunächst die drei Verbundglaspakete hergestellt, und diese dann unter Zwischenschaltung der Abstandsrahmen 9 miteinander verklebt. Sodann wird dieser Verbundglasblock in ein entsprechend geformtes Metallgehäuse 24 eingesetzt. Die Hohlräume bzw. Spalten zwischen dem Verbundglasblock und dem Metallgehäuse 24 werden sodann mit einem aushärtenden Gießharz 25 ausgefüllt.

Beschußversuche mit Maschinengewehr-Munition vom Typ « Panzerbrand » mit 42,5 g schwerem Hartkerngeschoß, einer Geschoßgeschwindigkeit von ca. 860 m/s und einer Geschoßenergie von ca. 15.700 Joule haben gezeigt, daß bei beiden beschriebenen Ausführungsformen der Geschoßkern in allen Fällen von den Stahlblenden entscheidend gebremst bzw. aufgehalten oder abgelenkt wurde. In keinem Fall kam es zu Splitterablösungen auf der dem Beobachter zugewandten Seite. Damit ist eine Beschußsicherheit für großkalibrige Munition erreicht, wie sie bisher mit vergleichsweise geringem Aufwand nicht erreicht wurde.

**Patentansprüche**

1. Beschußsicherer, von einem Metallgehäuse umgebener Verbundglasblock für den Sehschlitz eines Panzerfahrzeugs, dadurch gekennzeichnet, daß innerhalb des Verbundglasblocks in der von der Beschußseite abgewandten Hälfte eine rahmenförmige Stahlblende (20 ; 39 ; 46) angeordnet ist.

2. Verbundglasblock nach Anspruch 1, dadurch gekennzeichnet, daß die rahmenförmige Stahlblende (20 ; 39 ; 46) außen bündig mit den Umfangsflächen der benachbarten Glasscheiben (11, 13 ; 35, 37 ; 40, 42) verläuft.

3. Verbundglasblock nach Anspruch 1 und 2, dadurch gekennzeichnet, daß der Profilquerschnitt der rahmenförmigen Stahlblende (20 ; 39 ; 46) in der Richtung quer zur Achse (A-A) des Verbundglasblocks eine Breite (B) von wenigstens etwa 1 cm, und in Richtung der Achse (A-A) eine Dicke von wenigstens etwa 5 mm aufweist.

4. Verbundglasblock nach Anspruch 1 bis 3, dadurch gekennzeichnet, daß die rahmenförmige Stahlblende (20 ; 39 ; 46) aus gehärtetem Stahl besteht.

5. Verbundglasblock nach Anspruch 1 bis 4, dadurch gekennzeichnet, daß mehrere rahmenförmige Stahlblenden (39 ; 46) innerhalb des Verbundglasblocks angeordnet sind.

6. Verbundglasblock nach Anspruch 1 bis 5, dadurch gekennzeichnet, daß in dem von der rahmenförmigen Stahlblende (20 ; 39 ; 46) umgebenen Hohlraum ebenfalls eine Silikatglasplatte (12 ; 36 ; 41) angeordnet ist.

7. Verbundglasblock nach Anspruch 6, dadurch gekennzeichnet, daß der Spalt zwischen der rahmenförmigen Stahlblende (20 ; 39 ; 46) und den Umfangsflächen der von dieser umgebenen Silikatglasplatte (12 ; 36 ; 41) mit einem aushärtenden Gießharz (22) ausgefüllt ist.

8. Verbundglasblock nach Anspruch 1 bis 7, dadurch gekennzeichnet, daß zwischen zwei aufeinanderfolgenden Glasplatten (6, 10 ; 33, 35 ; 38, 40) ein mit Luft oder einem anderen Gas gefüllter Zwischenraum (8 ; 28 ; 34) vorgesehen ist, und die beidseits des Zwischenraums (8 ; 28 ; 34) angeordneten Glasplatten über Abstandshalterahmen (9) miteinander verbunden sind.

9. Verbundglasblock nach Anspruch 1 bis 8, dadurch gekennzeichnet, daß die zwischen den Umfangsflächen der Glasplatten und dem diese umgebenden Metallgehäuse (24) vorhandenen Spalten und Hohlräume durch ein aushärtendes Gießharz (25) ausgefüllt sind.

10. Verbundglasblock nach Anspruch 1 bis 9, dadurch gekennzeichnet, daß die dem Beobachter zugewandte Oberfläche des Verbundglasblocks mit einer als Splitterschutzschicht dienenden Kunststoff-Deckschicht versehen ist.

11. Verbundglasblock nach Anspruch 10, dadurch gekennzeichnet, daß die Kunststoff-Deckschicht aus einer mit der Glasoberfläche verklebten hochelastischen Polyurethanschicht (44) mit Selbstheileigenschaften besteht.

12. Verbundglasblock nach Anspruch 10, dadurch gekennzeichnet, daß die Kunststoff-Deckschicht aus einer mit der Glasoberfläche verklebten Polycarbonatplatte (15) besteht, auf deren äußerer Oberfläche zur Verbesserung der Kratzfestigkeit eine hochelastische Polyurethanschicht (16) mit Selbstheileigenschaften angeordnet ist.

**Claims**

1. A bullet-proof glazing unit comprising a laminated glass block surrounded by a metal housing for the sight aperture of an armored vehicle characterized in that a frame-like steel baffle (20 ; 39 ; and 46) is placed within the laminated glass block in the half thereof remote from the exposed side.

2. The laminated glass block as claimed in claim 1 characterized in that on the outside the frame-like steel baffle (20 ; 39 ; 46) is flush with the peripheral faces of the adjoining glass sheets (11, 13 ; 35, 37 ; 40, 42).

3. The laminated glass block as claimed in claims 1 and 2 characterized in that the cross section of the frame-like steel baffle (20 ; 39 ; 46) as considered in the direction perpendicular to the axis (A-A) of the laminated glass block has a breadth (B) of at least approximately 1 cm and as considered in the direction of the axis (A-A) has a thickness of at least approximately 5 mm.

4. The laminated glass block as claimed in claims 1 through 3 characterized in that the frame-like steel baffle (20 ; 39 ; 46) is made of hardened steel.

5. The laminated glass block as claimed in claims 1 through 4 characterized by a plurality of frame-like steel baffles (39 ; 46) arranged within the laminated glass block.

6. The laminated glass block as claimed in claims 1 through 5 characterized in that a silicate glass plate (12 ; 36 ; 41) as well is arranged in the cavity surrounded by the frame-like steel baffle (20 ; 39 ; 46).

7. The laminated glass block as claimed in claim 6 characterized in that the gap between the frame-like steel barrel (20 ; 39 ; 46) and the peripheral faces of the silicate glass plate (12 ; 36 ; 41) surrounded by same is filled with a curing casting resin (22).

8. The laminated glass block as claimed in claims 1 through 7 characterized by a gap (8 ; 28 ; 34) filled with air or another gas between two consecutive glass plates (6, 10 ; 33, 35 ; 38, 40) and the glass plates on the two sides of the gap (8 ; 28 ; 34) are connected to each other by way of spacer frames (9).

9. The laminated glass block as claimed in claims 1 through 8 characterized in that between the peripheral faces of the glass plates and the metal housing (24) surrounding them gaps and other cavities are filled by a curing casting resin (25).

10. The laminated glass block as claimed in claims 1 through 9 characterized in that the surface of the laminated glass block turned towards the observer is provided with a plastic covering layer as a protection against splinters.

11. The laminated glass block as claimed in claim 10 characterized in that the plastic covering layer consists of a high elasticity polyurethane layer (44), bonded to the glass surface, with self-healing properties.

12. The laminated glass block as claimed in claim 10 characterized in that the plastic covering layer consists of a polycarbonate plate (15) bonded to the glass surface, on whose outer surface a high-elasticity polyurethane layer (16) with self-healing properties is located in order to improve resistance to scoring.


**Revendications**

1. Bloc de verre feuilleté pare-balles entouré par une monture métallique et destiné à la fente de visée d'un véhicule blindé, caractérisé en ce qu'à l'intérieur du bloc de verre feuilleté, dans la moitié opposée au côté exposé au tir, est monté un écran d'acier en forme de cadre (20, 39, 46).

2. Bloc de verre feuilleté suivant la revendication 1, caractérisé en ce que l'écran d'acier en forme de cadre (20, 39, 46) s'étend extérieurement au ras des surfaces circonférentielles des lames de verre adjacentes (11, 13 ; 35, 37 ; 40, 42).

3. Bloc de verre feuilleté suivant les revendications 1 et 2, caractérisé en ce que la section transversale de l'écran d'acier en forme de cadre (20, 39, 46) a une largeur (B) d'au moins environ 1 cm dans le sens perpendiculaire à l'axe (A-A) du bloc de verre feuilleté et une épaisseur d'au moins environ 5 mm dans le sens de l'axe (A-A).

4. Bloc de verre feuilleté suivant l'une quelconque des revendications 1 à 3, caractérisé en ce que l'écran d'acier en forme de cadre (20, 39, 46) est en acier durci.

5. Bloc de verre feuilleté suivant l'une quelconque des revendications 1 à 4, caractérisé en ce que plusieurs écrans d'acier en forme de cadre (20, 39, 46) sont montés à l'intérieur du bloc de verre feuilleté.

6. Bloc de verre feuilleté suivant l'une quelconque des revendications 1 à 5, caractérisé en ce que dans le creux encerclé par l'écran d'acier en forme de cadre (20, 39, 46) est également montée une lame de verre au silicate (12, 36, 41).

7. Bloc de verre feuilleté suivant la revendication 6, caractérisé en ce que l'interstice entre l'écran d'acier en forme de cadre (20, 39, 46) et les surfaces circonférentielles de la lame de verre au silicate (12, 36, 41) entourée par cet écran est rempli d'une résine de coulée durcissante (22).

8. Bloc de verre feuilleté suivant l'une quelconque des revendications 1 à 7, caractérisé en ce qu'entre deux lames de verre successives (6, 10, 33, 35, 38, 40) est prévu un espace intermédiaire (8, 28, 34) rempli d'air ou d'un autre gaz et les lames de verre disposées de part et d'autre de l'espace intermédiaire (8, 28, 34) sont reliées l'une à l'autre par l'intermédiaire d'un cadre d'espacement (9).

9. Bloc de verre feuilleté suivant l'une quelconque des revendications 1 à 8, caractérisé en ce que les interstices et les creux présents entre les surfaces circonférentielles des lames de verre et la monture métallique (24) qui les entoure sont remplies par une résine de coulée durcissante (25).

10. Bloc de verre feuilleté suivant l'une quelconque des revendications 1 à 9, caractérisé en ce que la surface du bloc de verre feuilleté tournée vers l'observateur est pourvue d'une couche de·recouvrement en matière plastique servant de couche antiéclat.

11. Bloc de verre feuilleté suivant la revendication 10, caractérisé en ce que la couche de recouvrement en matière plastique est faite d'une couche de polyuréthanne très élastique (44) collée sur la surface du verre et présentant des propriétés antorégénératrices.

12. Bloc de verre feuilleté suivant la revendication 10, caractérisé en ce que la couche de recouvrement en matière plastique est faite d'une lame de polycarbonate (15) collée sur la surface du verre, sur la surface externe de laquelle est appliquée une couche de polyuréthanne très élastique (16) présentant des propriétés autorégénératrices et destinée à améliorer la résistance aux rayures.

Fig. 1

Fig. 2